# EUROPÄISCHE PATENTANMELDUNG

(11) **EP 1 488 940 A1**
(43) Veröffentlichungstag der Anmeldung: **22.12.2004**
(21) Anmeldenummer: 04009174.6
(22) Anmeldetag: 17.04.2004
(51) Int. Cl.: B60C 15/06, B60C 15/05

(54) **Fahrzeugluftreifen**

(30) Priorität: 20.06.2003 DE 10327678
(71) Anmelder: Continental Aktiengesellschaft, 30165 Hannover (DE)
(72) Erfinder: Frerichs, Udo, 30669 Langenhagen (DE)

(57) **Zusammenfassung**

Die Erfindung betrifft einen Fahrzeugluftreifen in radialer Bauart, insbesondere für Personenkraftwagen, mit einem profilierten Laufstreifen, einem Gürtel, Wulstbereichen mit zugfesten Wulstkernen (5) und elastomeren Kernprofilen (8) sowie zumindest einer Karkasslage (4), welche axial innenseitig der Wulstkerne (5) beginnend um diese verläuft und axial außen als Hochschlag (4a) endet, wobei der Reifen zur Montage auf einer Felgenhumps aufweisenden, insbesondere standardmäßig ausgeführten Felge vorgesehen ist. In den Wulstbereichen (3, 3', 3") ist jeweils zumindest ein mit Festigkeitsträgern versehener Verstärkungsstreifen (9, 19) angeordnet, dessen Endabschnitte (9a, 9c, 19a, 19c) neben dem Karkasshochschlag (4a, 4'a, 4"a, 4"'a) verlaufend an diesen angebunden sind und welcher im Bereich axial innerhalb der Wulstkerne (5, 5') ein Ringprofil (15, 25) umschließt.

## Beschreibung

Die Erfindung betrifft einen Fahrzeugluftreifen in radialer Bauart, insbesondere für Personenkraftwagen, mit einem profilierten Laufstreifen, einem Gürtel, Wulstbereichen mit zugfesten Wulstkernen und elastomeren Kernprofilen sowie zumindest einer Karkasslage, welche axial innenseitig der Wulstkerne beginnend um diese verläuft und axial außen als Hochschlag endet, wobei der Reifen zur Montage auf einer Humps aufweisenden, insbesondere standardmäßig ausgeführten Felge vorgesehen ist.

Ein derartiger Aufbau ist für Fahrzeugluftreifen in radialer Bauart für Personenkraftwagen üblich. Solange der Reifen mit entsprechendem Innendruck beaufschlagt ist, ist auf herkömmlich ausgeführten Felgen ein Klemmsitz der Wülste sichergestellt. Im Pannenfall, bei drucklosem Reifen, verrutscht jedoch unter der vom Fahrzeug wirkenden Last innerhalb kürzester Zeit zumindest einer der Reifenwülste in Richtung Tiefbett der Felge, sodass eine Weiterfahrt unmöglich wird oder bei Weiterfahrt Beschädigungen irreparabler Art sowohl am Reifen als auch an der Felge unvermeidlich sind.

Es ist bereits eine Vielzahl von Vorschlägen und Lösungen bekannt, mit welchen die Wulstbereiche eines Reifens abwurfsicherer gestaltet werden sollen. So wird beispielsweise in der WO 95/23073 vorgeschlagen, die Karkasslage nicht um den Kern herumzuführen sondern um ein axial innen neben dem Kern angeordnetes elastomeres Element zu schlingen und radial innerhalb des Kernes wieder ein Stück zurückzuführen. Bei drucklosem Reifen wird über das elastomere Element ein Kippmoment ausgelöst, durch welches der Wulst nach axial innen angehoben wird, sodass ein Abwerfen des Wulstes von der Folge vermieden wird. Die gegenüber der üblichen Ausführung deutlich massivere Ausgestaltung der Wulstbereiche erfordert schon aus diesem Grund besonders ausgeführte und somit nicht mehr standardmäßige Felgen.

Eine andere Ausführungsform, bei welcher ebenfalls die Karkasslage in den Wulstbereichen ein gesondertes Element umschlingt und radial innerhalb der Wulstkerne rückgeführt ist, ist aus der WO 01/25031 A1 bekannt. Auch diese Ausführung erfordert in Folge des wesentlich voluminöseren Wulstaufbaues besonders ausgeführte Felgen.

Der Erfindung liegt die Aufgabe zu Grunde, bei einem Fahrzeugluftreifen der eingangs genannten Art, welcher eine auf herkömmliche Weise um den Kern geführte Karkasslage aufweist und zur Montage auf einer standardmäßig ausgeführten Felge geeignet ist, die Abwurfsicherheit im Pannenfall deutlich zu verbessern.

Gelöst wird die gestellte Aufgabe erfindungsgemäß dadurch, dass in den Wulstbereichen jeweils zumindest ein mit Festigkeitsträgern versehener Verstärkungsstreifen angeordnet ist, dessen Endabschnitte neben dem Karkasshochschlag verlaufen und welcher im Bereich axial innerhalb des Wulstkernes ein Ringprofil umläuft.

Die gesonderten Verstärkungsreifen und Ringprofile können derart ausgeführt und auf einander abgestimmt werden, dass sie in Wulstbereichen üblicher Abmessungen untergebracht werden können. Bei drucklosem Reifen bewirken die an den Karkasshochschlag gekoppelten Abschnitten des Verstärkungsstreifen in Richtung Gürtel wirkende Zugkräfte, die auf das Ringprofil übertragen werden und derart ein Kippmoment auf den Wulstbereich ausüben, wodurch dieser gegen die Sitzfläche und gegen den Felgenhump gedrückt wird.

Bei einer bevorzugten Ausführungsform der Erfindung endet zumindest einer der Endabschnitte des Verstärkungsstreifens radial innerhalb des Hochschlages der Karkasslage. Diese Maßnahme ist für die erwünschte Anbindung bzw. Ankopplung der Endabschnitte des Verstärkungsstreifens von Vorteil.

Dabei kann der axial weiter außen verlaufende Endabschnitt des Verstärkungsstreifens entweder radial innerhalb oder radial außerhalb des anderen Endabschnittes enden. Diese Maßnahme beeinflusst das Ausmaß des Anbindens des Verstärkungsstreifens an die Karkasslage.

Der länger ausgeführte Endabschnitt des Verstärkungsstreifens kann dabei bis auf 50 % der Querschnittshöhe des Reifens reichen, um entsprechende Zugkräfte übertragen zu können.

Das Ringprofil selbst besteht bei einer der Ausführungsformen der Erfindung aus einem elastomeren Material, insbesondere aus Gummi, und weist eine Shorehärte von 95 ± 5 Shore A auf. Das Ringprofil besteht daher aus einem harten Material, um unverwünschte Deformationen im Wulstbereich zu vermeiden.

Bei einer weiteren bevorzugten Ausführungsform der Erfindung weist das Ringprofil einen im Wesentlichen tropfen- oder dreiecksähnlichen Querschnitt auf und ist im Wulstbereich derart angeordnet, dass es mit einem im Wesentlichen spitz verlaufenden Abschnitt in den Bereich radial innerhalb des Wulstkernes reicht.

Um ein gewisses Ausmaß an Kraftübertragung zu erzielen, sollte die Querschnittsfläche des Ringprofils etwa 20 bis 30 % der Querschnittsfläche des Wulstkernes betragen.

Bei einer anderen Ausführungsform der Erfindung besteht das Ringprofil aus Stahl, insbesondere aus dem Material des Wulstkernes. Dies hat den Vorteil eines harten und zugfesten Ringprofils, welches besonders dafür geeignet ist, den Sitz der Wülste im Pannenfall auf der Felge zu sichern.

In diesem Zusammenhang ist es auch von Vorteil, wenn die Querschnittsfläche des Ringprofils 50 bis 70 % der Querschnittsfläche des Wulstkernes beträgt und das Ringprofil insbesondere rechteckförmig ausgeführt ist.

Im Rahmen der Erfindung sind unterschiedliche Varianten der Führung der Karkasslage im Zusammenhang mit einem ein- oder mehrteiligen Kernprofil, welches radial außerhalb des Kernes sitzt, möglich. Sämtlichen Ausführungen ist gemeinsam, dass sie sicherstellen, dass vom Verstärkungsstreifen auf das Ringprofil ein Kippmoment ausgeübt wird, welches im Pannenfall die Wulstbereiche an der Felge hält. Bei einer dieser Ausführungen wird die Karkasslage in der üblichen Weise um das Kernprofil und den Wulstkern von innen nach außen geführt. Bei einer anderen möglichen Variante ist vorgesehen, dass die Karkasslage und ihr Hochschlag axial außenseitig des radial außerhalb des Kernes angeordneten ein- oder mehrteiligen Kernprofils verlaufen. Es sind auch Ausführungen möglich, bei denen die Karkasslage vom Gürtel kommend zwischen zwei radial außerhalb des Kernes angeordneten Kernprofilen verläuft und anschließend den Wulstkern, wie auch bei den anderen Ausführungsformen, von innen nach außen umläuft.

Der Verstärkungsstreifen selbst besteht insbesondere aus in eine Gummimischung eingebettetem Gewebe oder aus in eine Gummimischung eingebetteten sonstigen textilen oder metallischen Festigkeitsträgern, die vorzugsweise parallel zueinander verlaufen. Der Verstärkungsstreifen kann dabei auch aus sich kreuzenden Festigkeitsträgern, insbesondere aus gummiertem Kreuzgewebe bestehen. Die Materialauswahl und Ausführung der Verstärkungsstreifen wird nach den jeweiligen Gegebenheiten - Ausführung des Ringprofils, Verlauf der Karkasslage etc. - getroffen.

Die Erfindung wird nun anhand der Zeichnung, die schematisch mehrere Ausführungsbeispiele darstellt, näher beschrieben. Dabei zeigen
Fig. 1 einen radialen Schnitt durch einen auf einer Felge montierten Reifen mit einer ersten Ausführungsform der Erfindung und
Fig. 2 bis 4 radiale Schnitte durch den Wulstbereich eines Reifens mit unterschiedlichen Ausführungsformen der Erfindung.

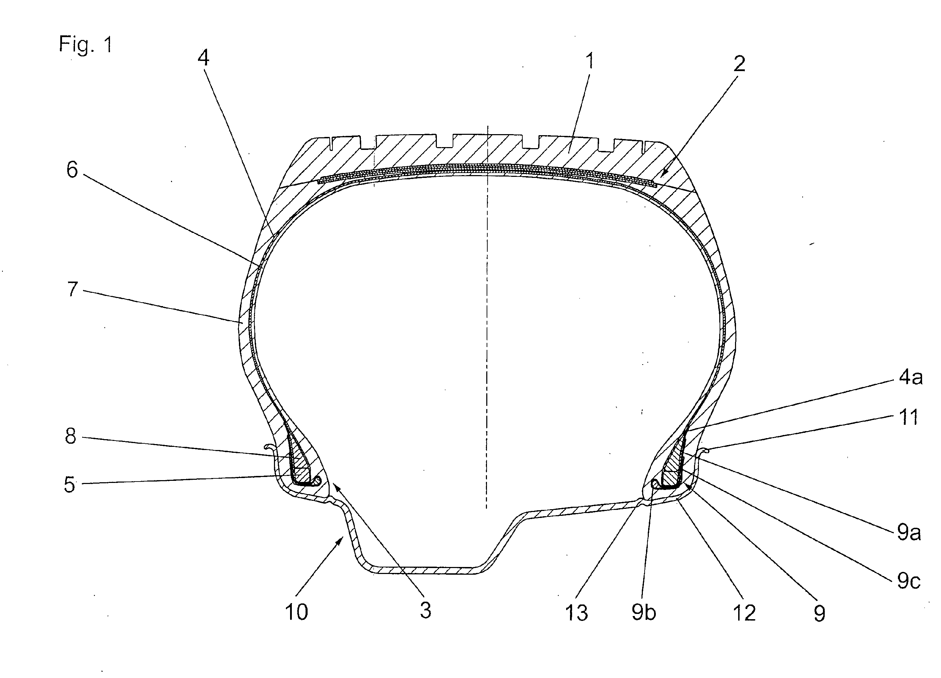

Fig. 1 zeigt einen auf einer herkömmlichen Tiefbettfelge montierten Radialreifen für Personenkraftwagen. Die insbesondere aus Metall bestehende und einteilig ausgeführte Felge 10 weist axial außen Felgenhörner 11 auf, an welche Sitzflächen 12 für Reifenwülste 3 und je ein Hump 13 anschließen. Die Sitzflächen 12 schließen in bekannter Weise mit der axialen Richtung einen Winkel ein, der insbesondere 5 ° beträgt.

Der Reifen umfasst einen profilierten Laufstreifen 1, einen vorzugsweise aus zwei Lagen bestehenden Gürtel 2, insbesondere eine Karkasslage 4, die bereits erwähnten Wülste 3, welche mit zugfesten Wulstkernen 5 versehen sind, eine luftdichte bzw. weitgehend luftdichte Innenplatte 6 und Seitenwände 7. Die beiden Lagen des Gürtels 2 können in bekannter Weise aus in eine Gummimischung eingebetteten Festigkeitsträgern aus Stahlcord bestehen, welche in jeder Lage parallel zueinander verlaufen, wobei die Festigkeitsträger der einen Lage in kreuzender Anordnung zu den Festigkeitsträger der zweiten Lage orientiert sind. Die Karkasslage 4 besteht ebenfalls aus in eine Gummimischung eingebetteten textilen oder metallischen Festigkeitsträgern, die in den Seitenwänden 7 in radialer Richtung verlaufen, von der Innenseite her um den jeweiligen Wulstkern 5 geschlungen sind und in Richtung Gürtel wieder ein Stück rückgeführt sind und derart den sogenannten Hochschlag 4a bilden. Oberhalb jedes Wulstkernes 5, zwischen dem Hochschlag 4a und der Karkasslage 4 ist ein Kernprofil 8, ein sogenannter Apex, angeordnet.

Gemäß der Erfindung sind in den Wulstbereichen des Reifens auf besondere Weise verlaufende Verstärkungsstreifen 9, 19 und Ringprofile 15, 25 angeordnet. Die Verstärkungsstreifen 9, 19 bestehen aus in eine Gummimischung eingebettetem, zugfesten Gewebe aus Polyester, Rayon, Aramid, Nylon oder Stahlfäden oder eingebetteten parallel zueinander verlaufenden Festigkeitsträgern aus diesen Materialen. Bei einer Ausführung mit parallel zueinander verlaufenden Festigkeitsträgern sind diese, insbesondere in Übereinstimmung zu den Festigkeitsträgern in der Karkasslage 4 orientiert oder verlaufen unter einem spritzen Winkel zur radialen Richtung.

Bei den in Fig. 1 bis 3 gezeigten Ausführungen ist jeder Verstärkungsstreifen 9 an der Karkasslage 4, 4', 4" angebunden und weist einen am Hochschlag 4a, 4'a, 4"a der Karkasslage 4, 4', 4" anliegenden inneren Abschnitt 9a auf, verläuft anschließend radial innerhalb des Wulstkernes 5 entlang der Karkasslage 4, 4', 4" bildet axial innenseitig des Wulstkernes 5 eine Schlinge 9b, welche das Ringprofil 15 umläuft, kommt anschließend innerhalb des Wulstkernes 5 in Kontakt mit sich selber, um schließlich außenseitig des inneren Abschnittes 9a als äußerer Abschnitt 9c parallel zum Hochschlag 4a, 4'a, 4"a zu verlaufen. Der äußere Abschnitt 9c endet vorzugsweise in einer geringeren Höhe als der innere Abschnitt 9a. Der in einer größeren Höhe endende Abschnitt 9a kann bis zu 50 % der Querschnittshöhe des Reifen reichen, der andere Abschnitt 9c ist um 5 mm bis 10 mm kürzer. Das Ringprofil 15 besteht aus einer harten Gummimischung einer Shorehärte von 90 ± 5 Shore A und weist bevorzugt eine tropfenähnliche oder dreieckähnliche Querschnittsfläche auf, sodass es radial innerhalb jedes Wulstkernes 5 einen im Wesentlichen spitz zulaufenden Endabschnitt besitzt. Die Querschnittsfläche des Ringprofiles 15 beträgt zwischen 20 und 30 % der Querschnittsfläche des Kernes 5.

Im drucklosen Zustand des Reifens, während eines Pannenlaufes, wird über das Ringprofil 15 durch in den Abschnitten 9a, 9c des Verstärkungsstreifens 9 in Richtung Gürtel 2 wirkende Zugkräfte ein Moment derart auf den Wulst 3, 3', 3" ausgeübt, dass dieser in Richtung Felge 10 und gegen den Felgenhump 13 gedrückt wird, wodurch die Abwurfsicherheit des Reifens deutlich erhöht wird.

Fig. 1 zeigt eine Ausführung bei welcher die Karkasslage 4 vom Gürtel 2 kommend innenseitig des Kernprofils 8 verläuft.

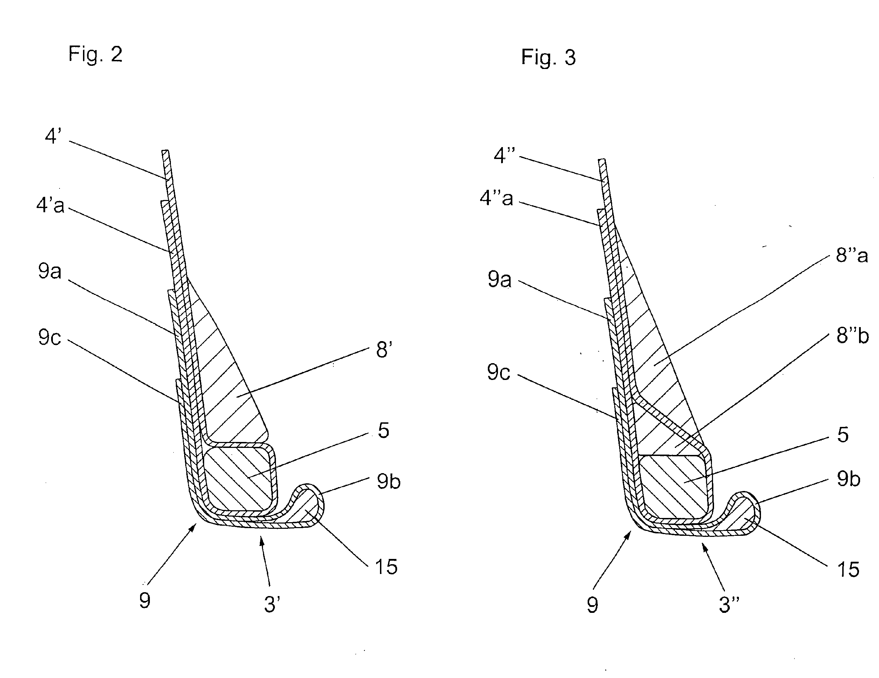

Bei der in Fig. 2 gezeigten Ausführungsform der Erfindung ist die Karkasslage 4' im Bereich des Wulstkernes 5 derart geführt, dass sich das radial außerhalb des Kernes 5 angeordnete Kernprofil 8' axial innenseitig der Karkasslage 4' befindet, sodass der Hochschlag 4'a der Karkasslage 4' parallel zur Karkasslage 4' verläuft. Somit umschlingt die Karkasslage 4' nahezu komplett den jeweiligen Wulstkern 5. Anordnung und Ausführung des Verstärkungsstreifens 9 sowie des Ringprofil 15 entsprechen jener gemäß der ersten Ausführungsform. Bei dieser Ausführungsform ist der Verlauf der Karkasslage 4' besonders günstig für die im Pannenfall, bei drucklosem Reifen, im Wulstbereich auf die Karkasslage 4', den Hochschlag 4'a und die Abschnitte 9a, 9c wirkenden Zugkräfte. Diese können in übereinstimmender Richtung wirken.

Auch bei der in Fig. 3 gezeigten Ausführungsvariante liegt der Unterschied zu den vorhergehenden Varianten in der Führung der Karkasslage 4" im Bereich der Wülste 3". Anordnung und Ausführung des Verstärkungsstreifens 9 und des Ringprofils 15 entsprechen ebenfalls jener gemäß den beiden anderen Ausführungsformen.

Bei der in Fig. 3 gezeigten Ausführungsvariante ist ein zweigeteiltes Kernprofil 8"a, 8"b vorgesehen, derart, dass das oberhalb des Wulstkernes 5 angeordnete Kernteil 8"b einen Querschnitt in der Form eines etwa gleichschenkeligen Dreieckes aufweist. Zwischen den beiden Kernprofilen 8"a, 8"b ist die Karkasslage 4" durchgeführt, um anschließend den Wulstkern 5 zu umschlingen und in Form eines Hochschlages 4"a wieder ein Stück rückgeführt zu sein.

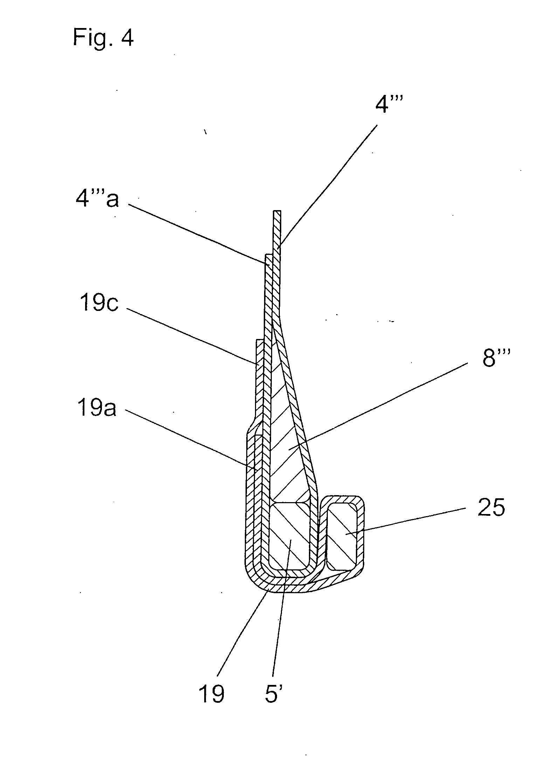

Fig. 4 zeigt eine Ausführungsform mit einem aus Stahl bestehenden Ringprofil 25. Dabei kann der Wulstkern 5', um welchen die Karkasslage 4"' in üblicher Weise geführt ist, eine kleinere Querschnittfläche als die Kerne 5 gemäß den anderen Ausführungen aufweisen, das Ringprofil 25 bildet eine Art "Nebenkern" mit einer noch kleineren Querschnittsfläche. Oberhalb des Kernes 5' ist eine Kernprofil 8"' vorgesehen, die neben dem Karkasshochschlag 4"'a verlaufenden Abschnitte 19a, 19c des Verstärkungsstreifens 19 enden in unterschiedlichen Höhen, wobei bei dieser Ausführungsform der weitere außen verlaufende Abschnitt 19c länger ausgeführt ist.

Die Erfindung ist auf die dargestellten Ausführungsvarianten nicht eingeschränkt. So kann beispielsweise das Ringprofil 15 einen anderen, insbesondere einen viereckigen, vorzugsweise rechteckförmigen Querschnitt aufweisen. Die Ausführung gemäß Fig. 4 kann eine Karkasslagenführung aufweisen, wie sie in Fig. 2 und 3 gezeigt ist. Die Verstärkungsstreifen können aus gummiertem Kreuzgewebe bestehen, es können ferner auch zwei oder mehr Verstärkungsstreifen in jedem Wulstbereich verwendet werden.

## Patentansprüche

1. Fahrzeugluftreifen in radialer Bauart, insbesondere für Personenkraftwagen, mit einem profilierten Laufstreifen, einem Gürtel, Wulstbereichen mit zugfesten Wulstkernen und elastomeren Kernprofilen sowie zumindest einer Karkasslage, welche axial innenseitig der Wulstkerne beginnend um diese verläuft und axial außen als Hochschlag endet, wobei der Reifen zur Montage auf einer Felgenhumps aufweisenden, insbesondere standardmäßig ausgeführten Felge vorgesehen ist,
**dadurch gekennzeichnet,**
**dass** in den Wulstbereichen (3, 3', 3") jeweils zumindest ein mit Festigkeitsträgern versehener Verstärkungsstreifen (9, 19) angeordnet ist, dessen Endabschnitte (9a, 9c, 19a, 19c) neben dem Karkasshochschlag (4a, 4'a, 4"a, 4"'a) verlaufend an diesen angebunden sind und welcher im Bereich axial innerhalb der Wulstkerne (5, 5') ein Ringprofil (15, 25) umschließt.

2. Fahrzeugluftreifen nach Anspruch 1, **dadurch gekennzeichnet, dass** zumindest einer der Endabschnitte (9a, 9c, 19a, 19c) des Verstärkungsstreifens (9, 19) radial innerhalb des Hochschlages (4a, 4'a, 4"a, 4"') der Karkasslage (4, 4', 4", 4"') endet.

3. Fahrzeugluftreifen nach Anspruch 1 oder 2, **dadurch gekennzeichnet, dass** der axial weiter außen verlaufende Endabschnitt (9c, 19c) des Verstärkungsstreifens (9, 19) radial innerhalb oder radial außerhalb des anderen Endabschnittes (9a, 19a) endet.

4. Fahrzeugluftreifen nach einem der Ansprüche 1 bis 3, **dadurch gekennzeichnet, dass** der länger ausgeführte Endabschnitt (9a, 19c) des Verstärkungsstreifens (9, 19) bis auf 50 % der Querschnittshöhe des Reifens reicht.

5. Fahrzeugluftreifen nach einem der Ansprüche 1 bis 4, **dadurch gekennzeichnet, dass** das Ringprofil (15) aus einem elastomeren Material, insbesondere aus Gummi, besteht und eine Shorehärte von vorzugsweise 95 ± 5 Shore A aufweist.

6. Fahrzeugluftreifen nach einem der Ansprüche 1 bis 5, **dadurch gekennzeichnet, dass** das Ringprofil (15) einen im Wesentlichen tropfen- oder dreiecksähnlichen Querschnitt aufweist, und dass sein Flächenschwerpunkt axial innerhalb des Wulstkernes (5) liegt.

7. Fahrzeugluftreifen nach einem der Ansprüche 1 bis 5, **dadurch gekennzeichnet, dass** das Ringprofil (15) mit einem zumindest im Wesentlichen spitz verlaufenden Abschnitt in den Bereich radial innerhalb des Wulstkernes (5) reicht.

8. Fahrzeugluftreifen nach einem der Ansprüche 1 bis 7, **dadurch gekennzeichnet, dass** die Querschnittsfläche des Ringprofils (15) 20 bis 30 % der Querschnittsfläche des Wulstkernes (5) beträgt.

9. Fahrzeugluftreifen nach einem der Ansprüche 1 bis 4, **dadurch gekennzeichnet, dass** das Ringprofil (25) aus Stahl und insbesondere aus dem Material des Wulstkernes (5') besteht.

10. Fahrzeugluftreifen nach Anspruch 9, **dadurch gekennzeichnet, dass** die Querschnittsfläche des Ringprofils (25) 50 bis 70 % der Querschnittsfläche des Wulstkernes (5') beträgt und vorzugsweise rechteckförmig ausgeführt ist.

11. Fahrzeugluftreifen nach einem der Ansprüche 1 bis 10, **dadurch gekennzeichnet, dass** die Karkasslage (4, 4"') ein radial außerhalb des Kernes (5, 5') angeordnetes ein- oder mehrteiliges Kernprofil (8, 8"') von innen nach außen umläuft.

12. Fahrzeugluftreifen nach einem der Ansprüche 1 bis 10, **dadurch gekennzeichnet, dass** die Karkasslage (4') und ihr Hochschlag (4'a) axial außenseitig eines radial außerhalb des Kernes (5) angeordneten ein- oder mehrteiligen Kernprofils (8') verlaufen.

13. Fahrzeugluftreifen nach einem der Ansprüche 1 bis 10, **dadurch gekennzeichnet**, **dadurch gekennzeichnet, dass** die Karkasslage (4") vom Gürtel (2) kommend zwischen zwei radial außerhalb des Kernes (5) angeordneten Kernprofilteilen (8"a, 8"b) verläuft.

14. Fahrzeugluftreifen nach einem der Ansprüche 1 bis 13 **dadurch gekennzeichnet, dass** der Verstärkungsstreifen (9, 25) aus in eine Gummimischung eingebettetem Gewebe oder aus in eine Gummimischung eingebetteten textilen oder metallischen Festigkeitsträgern, die vorzugsweise parallel zueinander verlaufen, besteht.

15. Fahrzeugluftreifen nach einem der Ansprüche 1 bis 14, **dadurch gekennzeichnet, dass** der Verstärkungsstreifen (9, 25) aus sich kreuzende Festigkeitsträgern, insbesondere aus gummiertem Kreuzgewebe, besteht.
